# EUROPÄISCHE PATENTSCHRIFT

(11) **EP 3 838 727 B1**
(45) Veröffentlichungstag und Bekanntmachung des Hinweises auf die Patenterteilung: **30.07.2025**
(21) Anmeldenummer: 20205108.2
(22) Anmeldetag: 02.11.2020
(51) Int. Cl.: B62J 19/00, B62J 23/00, B62J 1/18, B62J 17/00, B62J 7/04, B62J 99/00

(54) **ABDECKVORRICHTUNG EINER KOMPONENTE EINES NEIGEFAHRZEUGS**
COVERING DEVICE FOR A COMPONENT OF A TILTING VEHICLE
DISPOSITIF DE RECOUVREMENT D'UN COMPOSANT D'UN VÉHICULE INCLINABLE

(30) Priorität: 16.12.2019 DE 102019134475
(43) Veröffentlichungstag der Anmeldung: 23.06.2021
(73) Patentinhaber: Bayerische Motoren Werke Aktiengesellschaft, 80809 München (DE)
(72) Erfinder: Sievers-Paulsen, Johann, 85354 Freising (DE); Dunkel, Matthias, 08412 Werdau (DE); Pazulla, Martin, 82515 Wolfratshausen (DE)

(56) Entgegenhaltungen:
- EP-A2- 2 181 917
- JP-A- 2001 255 175
- JP-A- 2007 091 022
- JP-U- H 061 167

## Beschreibung

Die Erfindung betrifft eine Abdeckvorrichtung einer Komponente eines Neigefahrzeugs.

Aus dem Stand der Technik sind Abdeckvorrichtungen für Komponenten von Neigefahrzeugen in unterschiedlichen Ausgestaltungsvarianten bekannt. Diese dienen beispielsweise dazu, eine Höckerabdeckung zu bilden, um eine Tragstruktur des Neigefahrzeugs optisch zu kaschieren oder um eine Komponente in ihrer technischen Funktion zu unterstützen. Solchenfalls kann die Abdeckvorrichtung beispielsweise im Bereich einer Sitzeinheit, wie Fahrersitz oder Soziussitz, oder einer Ablagefläche für den Transport von Gegenständen angeordnet sein.

Bei den bekannten Abdeckvorrichtungen hat es sich als nachteilig herausgestellt, dass abhängig von der Oberflächengeometrie der Abdeckvorrichtung Niederschlag nicht oder nicht zufriedenstellend ablaufbar ist. Hierdurch sind die bekannten Abdeckvorrichtungen vor Benutzung des Neigefahrzeugs durch einen Benutzer zu trocknen, was sich als zeitaufwändig und umständlich erweist.

Eine nicht gattungsgemäße Abdeckvorrichtung für eine Platine ist bekannt aus JP 2001 255 175 A. JP 2001 255 175 zeigt eine Abdeckvorrichtung einer Komponente eines Neigefahrzeugs mit mindestes einem Verkleidungsmittel, das an der Komponente und diese zumindest abschnittsweise überfangend anordenbar ist oder angeordnet ist, und mit mindestens einem Trägermittel, und mit mindestens einer Fluidleiteinheit, die mindestens einen Fluidkanal umfasst, der zumindest abschnittsweise zwischen dem Verkleidungsmittel und dem Trägermittel und/oder der Komponente gebildet ist, die mindestens einen Einlass umfasst, durch den Fluid dem Fluidkanal der Fluidleiteinheit zuführbar ist und der durch einen Spalt zwischen einer Aussparung des Trägermittels gebildet ist, und die mindestens einen Auslass umfasst, durch den das Fluid aus dem Fluidkanal nach außen an die Umgebung abführbar ist.

Eine Aufgabe eines Ausführungsbeispiels der Erfindung ist, eine Abdeckvorrichtung einer Komponente eines Neigefahrzeugs vorzuschlagen, bei der ein Abführen von Fluid erleichtert ist.

Diese Aufgabe wird gelöst durch eine Abdeckvorrichtung einer Komponente eines Neigefahrzeugs mit mindestes einem Verkleidungsmittel, das an der Komponente und diese zumindest abschnittsweise überfangend anordenbar ist oder angeordnet ist, und mit mindestens einem Trägermittel, durch das das Verkleidungsmittel an der Komponente mittelbar oder unmittelbar festlegbar oder festgelegt ist und das mit einem Vorsprung durch eine durchgehende Aussparung im Verkleidungsmittel hindurchragt und von außen zugänglich ist und mit mindestens einer Fluidleiteinheit, die mindestens einen Fluidkanal umfasst, der zumindest abschnittsweise zwischen dem Verkleidungsmittel und dem Trägermittel und/oder der Komponente gebildet ist, die mindestens einen Einlass umfasst, durch den Fluid dem Fluidkanal der Fluidleiteinheit zuführbar ist und der durch einen Spalt zwischen der Aussparung im Verkleidungsmittel und dem Vorsprung des Trägermittels gebildet ist, und die mindestens einen Auslass umfasst, durch den das Fluid aus dem Fluidkanal nach außen an die Umgebung abführbar ist.

Dadurch, dass die Abdeckvorrichtung ein Verkleidungsmittel mit einer Aussparung umfasst, die zusammen mit einem Vorsprung des Trägermittels einen Einlass einer Fluideinheit bildet, kann Fluid, das sich auf der Abdeckvorrichtung anzusammeln versucht, automatisch und auf einfache Weise abgeführt werden. Solchenfalls läuft das Fluid unterhalb der Außenseite des Verkleidungsmittels ab. Bei dem Fluid kann es sich beispielsweise um Wasser, insbesondere Regenwasser, handeln.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Um ein Abfließen von Fluid zu verbessern erweist es sich als vorteilhaft, wenn das Verkleidungsmittel mindestens eine trichterförmige Vertiefung umfasst, die von einer der Komponente abgewandten Oberfläche des Verkleidungsmittels in Richtung auf die Komponente zurückspringend ausgebildet ist.

Durch die trichterförmige Vertiefung ist Fluid von einer der Komponente abgewandten Oberfläche abführbar und in der trichterförmigen Vertiefung sammelbar. Von der trichterförmigen Vertiefung kann das Fluid dem Einlass der Fluidleiteinheit zugeführt werden.

Bei einer Weiterbildung letztgenannter Ausführungsform erweist es sich als vorteilhaft, wenn die durchgehende Aussparung in dem Verkleidungsmittel in oder an der Vertiefung angeordnet ist.

Solchenfalls bildet die Vertiefung eine Mulde, wodurch das Abführen von Fluid durch das Vorsehen der Aussparung in der Vertiefung, also des Einlasses der Fluideinheit in der Vertiefung, erleichtert ist.

Grundsätzlich ist es denkbar, dass der Fluidkanal ein vom Trägermittel und vom Verkleidungsmittel separates oder separierbares Bauteil umfasst. Solchenfalls kann der Fluidkanal beispielsweise ein Rohr, einen Schlauch oder Dergleichen umfassen.

Der Fluidkanal lässt sich einfach und kostengünstig ausbilden, wenn der Fluidkanal durch mindestens einen zwischen Trägermittel und Verkleidungsmittel gebildeten Hohlraum gebildet ist.

Um einen ausreichenden Abfluss von Fluid durch den Fluidkanal zu gewährleisten, ist bei einer Ausführungsform der Abdeckvorrichtung vorgesehen, dass der Fluidkanal, insbesondere der Hohlraum bezüglich seiner geringsten Erstreckung einen Durchmesser umfasst, der mindestens 4 mm, insbesondere mindestens 5 mm, aufweist.

Hierdurch ist es ermöglicht, dass gegebenenfalls vorherrschende Oberflächenspannungen des Fluids und Kohäsionskräfte zwischen Fluid und Wandung des Fluidkanals leichter überwunden werden können.

Um einen Abfluss des Fluids im Fluidkanal weiter zu verbessern, ist bei einer Weiterbildung vorgesehen, dass das den Boden für den Fluidkanal bildende Trägermittel zumindest im Bereich des Fluidkanals bezüglich einer Horizontalen eine Neigung von mindestens 3°, insbesondere mindestens 5°, insbesondere mindestens 10° umfasst.

Hierdurch wird ein geringes Gefälle erzeugt, dass den Abfluss des Fluids aus dem Fluidkanal unterstützt.

Ferner erweist es sich als vorteilhaft, wenn zumindest die Vertiefung des Verkleidungsmittels und/oder der Fluidkanal, insbesondere der Hohlraum, eine haftreibungsreduzierende Beschichtung umfasst.

Solchenfalls kann die haftreibungsreduzierende Beschichtung beispielsweise einen Lotuseffekt umfassen. Die Beschichtung kann eine Lackierung, eine Folie, eine Bedampfung oder Dergleichen umfassen.

Ferner ist es grundsätzlich denkbar, dass der Auslass an einer beliebigen Stelle bezüglich des Neigefahrzeugs angeordnet ist. Es erweist sich als vorteilhaft, wenn der Auslass bezüglich des Neigefahrzeugs heckseitig angeordnet ist.

Solchenfalls kann das Fluid in einem Bereich ausgelassen werden, an dem das Fluid vom Benutzer des Neigefahrzeugs, insbesondere während des Betriebs des Neigefahrzeugs, wegführbar ist.

Die Abdeckvorrichtung lässt sich einfach und kostengünstig ausbilden, wenn das Trägermittel und die Komponente ein gemeinsames einstückiges Bauteil umfassen, insbesondere, wenn das Trägerteil durch einen Trägerabschnitt der Komponente gebildet ist.

Solchenfalls ist die Abdeckvorrichtung bauteilreduziert ausbildbar.

Darüber hinaus ist bei einer Ausführungsform der Abdeckvorrichtung vorgesehen, dass die Fluidleiteinheit mindestens zwei Fluidkanäle und zwei Auslässe umfasst, wobei jedem Fluidkanal ein Auslass zugeordnet ist und/oder dass der den Einlass des Fluidkanals bildende Spalt zwischen der Aussparung im Verkleidungsmittel und dem Vorsprung des Trägermittels um den Vorsprung umlaufend ausgebildet ist.

Hierdurch kann der Abfluss von Fluid weiter verbessert werden.

Darüber hinaus ist es denkbar, dass die Fluideinheit beispielsweise einen Einlass und zwei Fluidkanäle umfasst, die sich einen gemeinsamen Auslass teilen. Solchenfalls kann die Fluideinheit der Abdeckvorrichtung den baulichen Gegebenheiten, die im Neigefahrzeug vorhanden sind, angepasst werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Abdeckvorrichtung.

In der Zeichnung zeigt:
- Figur 1: Eine perspektivische Draufsicht auf ein Ausführungsbeispiel der Abdeckvorrichtung;
- Figur 2: Eine perspektivische Draufsicht auf ein Trägermittel der Abdeckvorrichtung gemäß Figur 1.

Die Figuren zeigen eine insgesamt mit dem Bezugszeichen 2 versehene Abdeckvorrichtung einer Komponenten 4 eines Neigefahrzeugs (in den Figuren nicht explizit dargestellt). Die Abdeckvorrichtung 2 umfasst mindestens ein Verkleidungsmittel 6, das an der Komponente 4 und dieses abschnittsweise überfangend, angeordnet ist.

Darüber hinaus umfasst die Abdeckvorrichtung 2 ein Trägermittel 8, durch das das Verkleidungsmittel 6 an der Komponente 4 festlegbar ist. Das Trägermittel 8 umfasst einen Vorsprung 10, der durch eine durchgehende Aussparung 12 im Verkleidungsmittel 6 hindurchragt. Hierdurch ist der Vorsprung 10 des Trägermittels 8 von außen zugänglich.

Ferner umfasst die Abdeckvorrichtung 2 eine Fluidleiteinheit 14, durch die ein Fluid von der Oberfläche des Verkleidungsmittels 6 abführbar ist. Die Fluidleiteinheit 14 umfasst einen Einlass 16, durch den Fluid den Fluidkanälen 18 der Fluidleiteinheit 14 zuführbar ist und der durch einen Spalt zwischen der Aussparung 12 im Verkleidungsmittel 6 und dem Vorsprung 10 des Trägermittels 8 gebildet ist.

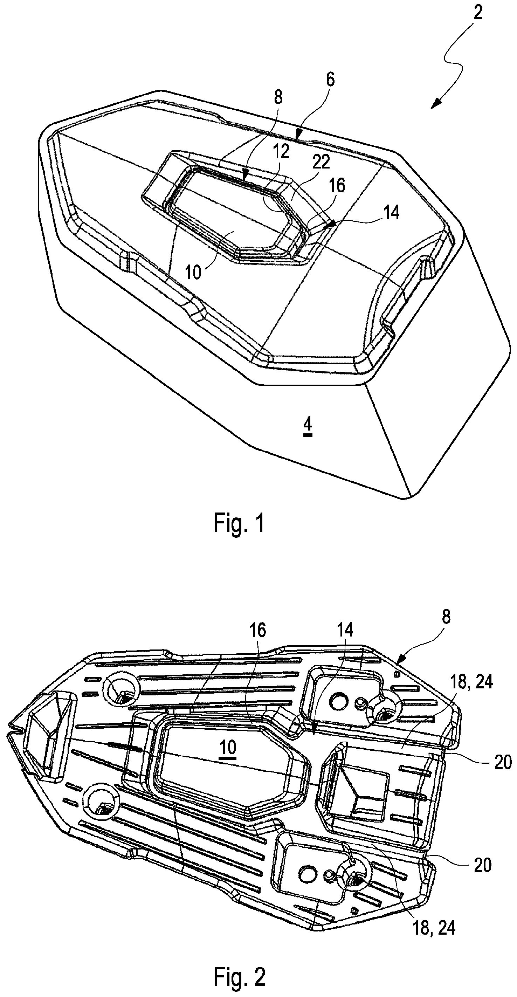

Bei dem in den Figuren gezeigten Ausführungsbeispiel umfasst die Fluideinheit 14 zwei Fluidkanäle 18, die zwischen dem Verkleidungsmittel 6 und dem Trägermittel 8 gebildet sind. Darüber hinaus umfasst die Fluidleiteinheit 14 einen Auslass 20, durch den das Fluid aus den Fluidkanälen 18 nach außen an die Umgebung abführbar ist. Wie in Figur 2 ersichtlich ist bei dem gezeigten Ausführungsbeispiel jedem Fluidkanal 18 ein eigener Auslass 20 zugeordnet.

Um Fluid auf einfache Weise dem Einlass 16 der Fluidleiteinheit 14 zuzuführen, umfasst das Verkleidungsmittel 6 eine trichterartige Vertiefung 22, in der die durchgehende Aussparung 12 und hierdurch der Einlass 16 der Fluidleiteinheit 14 angeordnet ist. Der Fluidkanal 18 ist durch einen zwischen Trägermittel 8 und Verkleidungsmittel 6 gebildeten Hohlraum 24 gebildet.

Darüber hinaus ist aus Figur 2 ersichtlich, dass der Auslass 20 der Fluidleiteinheit 14 bezüglich des Neigefahrzeugs heckseitig angeordnet ist.

### Bezugszeichenliste

- 2: Abdeckvorrichtung
- 4: Komponente
- 6: Verkleidungsmittel
- 8: Trägermittel
- 10: Vorsprung
- 12: Aussparung
- 14: Fluidleiteinheit
- 16: Einlass
- 18: Fluidkanal
- 20: Auslass
- 22: Vertiefung
- 24: Hohlraum

## Patentansprüche

1. Abdeckvorrichtung (2) einer Komponente (4) eines Neigefahrzeugs mit mindestes einem Verkleidungsmittel (6), das an der Komponente (4) und diese zumindest abschnittsweise überfangend anordenbar ist oder angeordnet ist, und mit mindestens einem Trägermittel (8), durch das das Verkleidungsmittel (6) an der Komponente (4) mittelbar oder unmittelbar festlegbar oder festgelegt ist und das mit einem Vorsprung (10) durch eine durchgehende Aussparung (12) im Verkleidungsmittel (6) hindurchragt und von außen zugänglich ist und mit mindestens einer Fluidleiteinheit (14), die mindestens einen Fluidkanal (18) umfasst, der zumindest abschnittsweise zwischen dem Verkleidungsmittel (6) und dem Trägermittel (8) und/oder der Komponente (4) gebildet ist, die mindestens einen Einlass (16) umfasst, durch den Fluid dem Fluidkanal (18) der Fluidleiteinheit (14) zuführbar ist und der durch einen Spalt zwischen der Aussparung (12) im Verkleidungsmittel (6) und dem Vorsprung (10) des Trägermittels (8) gebildet ist, und die mindestens einen Auslass (20) umfasst, durch den das Fluid aus dem Fluidkanal (18) nach außen an die Umgebung abführbar ist.

2. Abdeckvorrichtung (2) nach Anspruch 1, **dadurch gekennzeichnet, dass** das Verkleidungsmittel (6) mindestens eine trichterförmige Vertiefung (22) umfasst, die von einer der Komponente (4) abgewandten Oberfläche des Verkleidungsmittels (6) in Richtung auf die Komponente (4) zurückspringend ausgebildet ist.

3. Abdeckvorrichtung (2) nach Anspruch 2, **dadurch gekennzeichnet, dass** die durchgehende Aussparung (12) in dem Verkleidungsmittel (6) in oder an der Vertiefung (22) angeordnet ist.

4. Abdeckvorrichtung (2) nach mindestens einem der vorhergehenden Ansprüche **dadurch gekennzeichnet, dass** der Fluidkanal (18) durch mindestens einen zwischen Trägermittel (8) und Verkleidungsmittel (6) gebildeten Hohlraum (24) gebildet ist.

5. Abdeckvorrichtung (2) nach mindestens einem der vorhergehenden Ansprüche, **dadurch gekennzeichnet, dass** der Fluidkanal (18), insbesondere der Hohlraum (24), bezüglich seiner geringsten Erstreckung einen Durchmesser umfasst, der mindestens 4 mm, insbesondere mindestens 5 mm, aufweist.

6. Abdeckvorrichtung (2) nach mindestens einem der vorhergehenden Ansprüche, **dadurch gekennzeichnet, dass** das den Boden für den Fluidkanal (18) bildende Trägermittel (8) zumindest im Bereich des Fluidkanals (18) bezüglich einer Horizontalen eine Neigung von mindestens 3°, insbesondere mindestens 5°, insbesondere mindestens 10°, umfasst,

7. Abdeckvorrichtung (2) nach mindestens einem der vorhergehenden Ansprüche, **dadurch gekennzeichnet, dass** zumindest die Vertiefung (22) des Verkleidungsmittels (6) und/oder der Fluidkanal (18), insbesondere der Hohlraum (24), eine haftreibungsreduzierende Beschichtung umfasst.

8. Abdeckvorrichtung (2) nach mindestens einem der vorhergehenden Ansprüche, **dadurch gekennzeichnet, dass** der Auslass (20) bezüglich des Neigefahrzeugs heckseitig angeordnet ist.

9. Abdeckvorrichtung (2) nach mindestens einem der vorhergehenden Ansprüche, **dadurch gekennzeichnet, dass** das Trägermittel (8) und die Komponente (4) ein gemeinsames einstückiges Bauteil umfassen, insbesondere dass das Trägerteil durch einen Trägerabschnitt der Komponente (4) gebildet ist.

10. Abdeckvorrichtung (2) nach mindestens einem der vorhergehenden Ansprüche, **dadurch gekennzeichnet, dass** die Fluidleiteinheit (14) mindestens zwei Fluidkanäle (18) und zwei Auslässe (20) umfasst, wobei jedem Fluidkanal (18) ein Auslass (20) zugeordnet ist und/oder dass der den Einlass (16) des Fluidkanals (18) bildende Spalt zwischen der Aussparung (12) im Verkleidungsmittel (6) und dem Vorsprung (10) des Trägermittels (8) um den Vorsprung (10) umlaufend ausgebildet ist.

## Claims

1. Covering device (2) for a component (4) of a tilting vehicle, having at least one cladding means (6) which is able to be arranged or is arranged on the component (4) so as to at least sectionally overlie the latter, and having at least one carrier means (8) by way of which the cladding means (6) is able to be fixed or is fixed directly or indirectly to the component (4) and which protrudes with a projection (10) through a continuous cutout (12) in the cladding means (6) and is accessible from the outside, and having at least one fluid-conducting unit (14) which comprises at least one fluid channel (18), formed at least sectionally between the cladding means (6) and the carrier means (8) and/or the component (4), and which comprises at least one inlet (16), through which fluid is able to be fed to the fluid channel (18) of the fluid-conducting unit (14), said at least one inlet being formed by a gap between the cutout (12) in the cladding means (6) and the projection (10) of the carrier means (8), and which comprises at least one outlet (20), through which the fluid is able to be removed outwards to the surroundings from the fluid channel (18).

2. Covering device (2) according to Claim 1, **characterized in that** the cladding means (6) comprises at least one funnel-shaped depression (22) which is formed to be set back from a surface, facing away from the component (4), of the cladding means (6) in the direction of the component (4).

3. Covering device (2) according to Claim 2, **characterized in that** the continuous cutout (12) in the cladding means (6) is arranged in or at the depression (22).

4. Covering device (2) according to at least one of the preceding claims, **characterized in that** the fluid channel (18) is formed by at least one cavity (24) which is formed between the carrier means (8) and the cladding means (6).

5. Covering device (2) according to at least one of the preceding claims, **characterized in that** the fluid channel (18), in particular the cavity (24), in relation to its smallest extent, has a diameter of at least 4 mm, in particular at least 5 mm.

6. Covering device (2) according to at least one of the preceding claims, **characterized in that** the carrier means (8), which forms the base for the fluid channel (18), at least in the region of the fluid channel (18), has in relation to a horizontal an inclination of at least 3°, in particular at least 5°, in particular at least 10°.

7. Covering device (2) according to at least one of the preceding claims, **characterized in that** at least the depression (22) of the cladding means (6) and/or the fluid channel (18), in particular the cavity (24), comprises a static-friction-reducing coating.

8. Covering device (2) according to at least one of the preceding claims, **characterized in that** the outlet (20) is arranged at the rear side in relation to the tilting vehicle.

9. Covering device (2) according to at least one of the preceding claims, **characterized in that** the carrier means (8) and the component (4) comprise a common one-piece component, in particular **in that** the carrier part is formed by a carrier portion of the component (4).

10. Covering device (2) according to at least one of the preceding claims, **characterized in that** the fluid-conducting unit (14) comprises at least two fluid channels (18) and two outlets (20), wherein each fluid channel (18) is assigned an outlet (20), and/or **in that** the gap between the cutout (12) in the cladding means (6) and the projection (10) of the carrier means (8) that forms the inlet (16) of the fluid channel (18) is formed so as to extend around the projection (10) in an encircling manner.

## Revendications

1. Dispositif de recouvrement (2) d'un composant (4) d'un véhicule inclinable, comprenant au moins un moyen de revêtement (6) qui est apte à être agencé ou est agencé sur le composant (4) et recouvre celui-ci au moins par endroits, et au moins un moyen de support (8) par lequel le moyen de revêtement (6) est apte à être fixé ou est fixé directement ou indirectement sur le composant (4) et qui dépasse, grâce à une protubérance (10), à travers un évidement continu (12) dans le moyen de revêtement (6) et est accessible de l'extérieur, et comprenant au moins une unité (14) de guidage de fluide qui comprend au moins un canal de fluide (18), qui est formé au moins partiellement entre le moyen de revêtement (6) et le moyen de support (8) et/ou le composant (4), qui comprend au moins une entrée (16) à travers laquelle du fluide est apte à être amené au canal de fluide (18) de l'unité (14) de guidage de fluide et qui est formée par un interstice entre l'évidement (12) dans le moyen de revêtement (6) et la protubérance (10) du moyen de support (8), et qui comprend au moins une sortie (20) par laquelle le fluide est apte à être évacué du canal de fluide (18) vers l'extérieur, dans l'environnement.

2. Dispositif de recouvrement (2) selon la revendication 1, **caractérisé en ce que** le moyen de revêtement (6) comprend au moins un renfoncement (22) en forme d'entonnoir qui est formé en direction du composant (4), en retrait par rapport à une surface du moyen de revêtement (6) opposée au composant (4).

3. Dispositif de recouvrement (2) selon la revendication 2, **caractérisé en ce que** l'évidement continu (12) dans le moyen de revêtement (6) est ménagé dans ou sur le renfoncement (22).

4. Dispositif de recouvrement (2) selon au moins une des revendications précédentes, **caractérisé en ce que** le canal de fluide (18) est formé par au moins une cavité (24) formée entre le moyen de support (8) et le moyen de revêtement (6).

5. Dispositif de recouvrement (2) selon au moins une des revendications précédentes, **caractérisé en ce que** le canal de fluide (18), en particulier la cavité (24), comprend, par rapport à son extension minimale, un diamètre qui est d'au moins 4mm, en particulier d'au moins 5mm.

6. Dispositif de recouvrement (2) selon au moins une des revendications précédentes, **caractérisé en ce que** le moyen de support (8) formant le fond du canal de fluide (18) présente, au moins dans la zone du canal de fluide (18), une inclinaison d'au moins 3°, en particulier d'au moins 5°, en particulier d'au moins 10°, par rapport à un plan horizontal.

7. Dispositif de recouvrement (2) selon au moins une des revendications précédentes, **caractérisé en ce qu'**au moins le renfoncement (22) du moyen de revêtement (6) et/ou le canal de fluide (18), en particulier la cavité (24), comprend un revêtement réduisant le frottement statique.

8. Dispositif de recouvrement (2) selon au moins une des revendications précédentes, **caractérisé en ce que** la sortie (20) est agencée à l'arrière par rapport au véhicule inclinable.

9. Dispositif de recouvrement (2) selon au moins une des revendications précédentes, **caractérisé en ce que** le moyen de support (8) et le composant (4) comprennent un élément monobloc commun, en particulier **en ce que** la partie de support est formée par une portion de support du composant (4).

10. Dispositif de recouvrement (2) selon au moins l'une des revendications précédentes, **caractérisé en ce que** l'unité (14) de guidage de fluide comprend au moins deux canaux de fluide (18) et deux sorties (20), chaque canal de fluide (18) étant associé à une sortie (20), et/ou **en ce que** l'interstice formant l'entrée (16) du canal de fluide (18) entre l'évidement (12) dans le moyen de revêtement (6) et la protubérance (10) du moyen de support (8) est formé de manière périphérique autour de la protubérance (10).
